# EUROPEAN PATENT APPLICATION

(11) **EP 2 003 860 A1**
(43) Date of publication of application: **17.12.2008**
(21) Application number: 07301102.5
(22) Date of filing: 12.06.2007
(51) Int. Cl.: H04L 29/12

(54) **Configuration of a communication terminal by provisioning of DHCP realm identifier**

(71) Applicant: Alcatel Lucent, 75008 Paris (FR)
(72) Inventor: Cristallo, Geoffrey, 1080 Molenbeek (BE); Miyazawa, Hamilton Hideki, 2018 Antwerp (BE)
(74) Representative: Chaffraix, Sylvain

(57) **Abstract**

Method for configuring a client (C₁, C₂) of a communication network (N), comprising :
- a first step consisting in having the client send a request (MR₁, MR₂) to a server (S) adapted to dynamically determine an IP address
- a second step consisting in having the server sending a reply message (MA₁, MA₂) backward; and,
wherein said client uses said IP address in subsequent IP datagram (MS₁, MS₂) sent through the communication network.

The method is new in that the server determines a realm associated with the client, and includes an identifier of this realm within the reply message. This identifier is included by the client in the subsequent IP datagrams.

## Description

The present invention relates to an IP communication network, and more particularly to the configuration of a client wishing to dynamically connect to such a communication network.

Communication networks based on the Internet Protocol version 4 are enduring lack of available IP addresses. The issue is worse in some countries like Asian countries and is becoming worse and worse due to the increasing number of types of clients connecting to the Internet. Clients can indeed comprise computers, IP phones, personal digital assistant (PDA), mobile phones, etc.

In order to not consume too many IP addresses, at least two mechanisms have been deployed.
First of all, the IP addresses of the clients are usually dynamically assigned through a protocol called DHCP ("*Dynamic Host Configuration* Protocol") and defined by the RFC 2131 of the IETF (Internet Engineering Task Force). Thanks to this dynamic allocation, an IP address is reserved by a client only for an amount of time, and can therefore be re-used by an other client for another time slot.
According to this protocol, when a client (a communication terminal, for instance) wishes to communicate through the communication network, it should send a request to a DHCP that will provide it in return with a dynamically-assigned IP address, selected from a pool of available IP addresses.

Another mechanism addressing the lack of available IPv4 addresses, which was described here above, consists in assigning the same IP addresses to several clients at the same time.
It is then mandatory to ensure that clients sharing the same IP addresses cannot communicate with the same other party, and create confusions. For this reason, the communication network is divided in several "realms" (or "addressing domains") wherein only one resource with a given IP address can exist (at the same time).

In today's deployment, in order to avoid inconsistencies in the usage of addresses, the DHCP is usually statistically associated to a realm. By configuration of the communication, each realm comprises a single DHCP server, and any client that gets its IP address from this DHCP becomes a member of the realm.

As long as the client communicates with resources (other clients, application servers, etc.) within its realm, the architecture provides satisfactory results. The same IP address may have be allocated to another client in another realm, without disturbing the behavior of the first realm and the communication of the first client with resources located in this realm.
However, it may occur that the client has to communicate with a resource, e.g. an application server, located in another realm.

In such a situation, the application server has no other way to identify the client than its IP address. As the IP address is not unique within the communication network, it is unable to route correctly the answer message to the right client.

To circumvent this important issue, application servers and any other resources are deployed so that they are only reachable within their own realm. This implies a strong constraint in architectures of communication networks, making them more expensive to deploy, and this also avoid the deployment of certain applications.

The aim of the invention is to propose a method for configuring communication clients by providing them with a dynamic IP address, while avoiding the drawbacks of the described solutions.

More precisely, a first object of the invention relates to a method for configuring a client of a communication network, comprising:
- a first step consisting in having said client send a request (MR₁, MR₂) to a server (S) adapted to dynamically determine an IP address for said client;
- a second step consisting in having said server sending a reply message (MA₁, MA₂) backward to said client, comprising said IP address; and,
wherein said client uses said IP address in subsequent IP datagrams (MS₁, MS₂) sent through said communication network,
characterized in that said server determines a realm associated with said client, and includes an identifier of said realm within said reply message. This identifier is included by the client in the subsequent IP datagrams.

According to an embodiment of the invention, the request and the reply message may comply with the Dynamic Host Configuration Protocol (DHCP).
The reply message may be a DCHPACK message. It may comprise the identifier within an option field.
The identifiers may be included in the subsequent IP datagram as a Header option of the IP packet.

Another object of the invention is a server for configuring a client of a communication network. Such a server comprises:
- means for receiving a request from the client, and dynamically determine an IP address for it,
- means for sending a reply message backward to the client, comprising said IP address.
The server is characterized in that it has means to determine a realm associated with the client, and to include an identifier of this realm within the reply message.

According to an embodiment, the server may be adapted so that the request and the reply message comply with the Dynamic Host Configuration Protocol (DHCP).
The reply message may be a DCHPACK message, and it may comprise the identifier within an option field.
The identifiers may be included in the subsequent IP datagram as a Header option of the IP packet.

In addition, the invention has for third object, a communication network comprising at least such a server.

The invention and its advantages over the prior art will be made clearer in the following description of embodiments, which will be made based on the annexed figure.

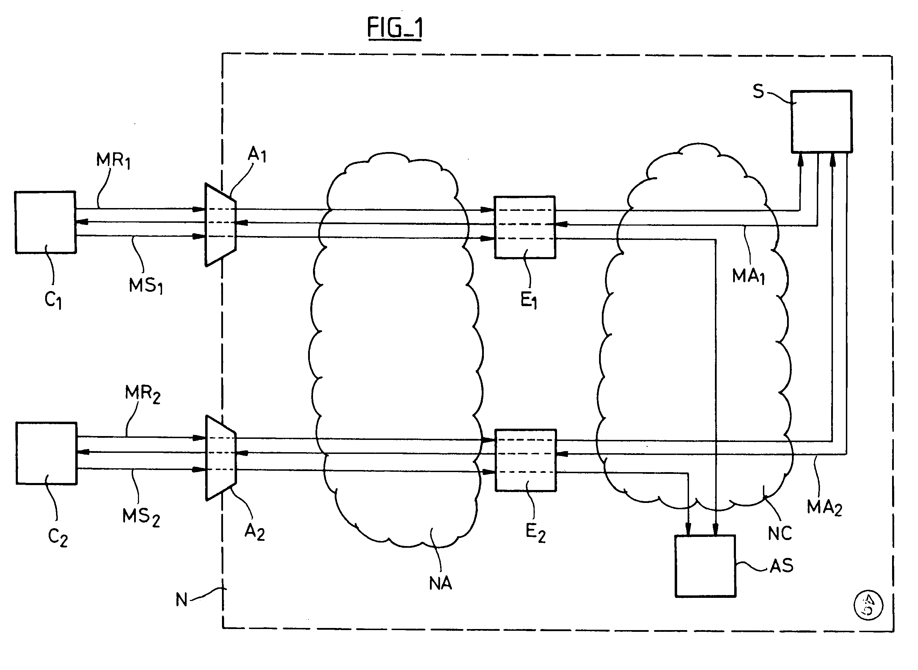

A communication network N is typically made of several sub-networks. In the embodiment shown in figure 1, two sub-networks have been represented: an access network N_{A} and a core network N_{C}.

Two communication clients C₁ and C₂ are connected to the access network N_{A} through two access nodes, respectively A₁ and A₂. These clients could be, as previously mentioned, of various types like mobile phones, fixed handset, computers, personal digital assistants (PDA), set-top boxes, IP phones, etc.
These clients could also be any apparatuses able to take the role of a client according to the RFC 3261 of the IETF, defining the Signaling Initiation Protocol.

The access network N_{A} is connected to the core network N_{C} by two edge routers E₁ and E₂.
In addition, the communication network N comprises at least a server S, adapted to determine and provide dynamically allocated IP addresses. According to one embodiment of the invention, this server may comply with the Dynamic Host Configuration Protocol, as defined in the RFC 2131 published by the IETF (Internet Engineering Task Force).

In addition, the communication network N can also comprise an application server AS. This application server can be located in the core network N_{C} or in any other sub-network connected to it. Similarly, the server S can be located within the core network N_{C} or outside of it.
The application server AS can provide many types of services. It can also be a call server, providing services related to call management, call establishment etc. It can also provide service of higher level, like conferencing, access to multimedia content, video streaming, billing, location-based services, etc.

In a first step, clients C₁, C₂ need to get an IP address in order to communicate within the communication network N. They thus send a request message MR₁, MR₂ towards the server S. These messages requests are transmitted over the communication network, through the access nodes A₁, A₂ and the edge routers E₁, E₂.

In the embodiment where the server S complies with the RFC 2131 of the IETF, these request messages are "DHCPREQUEST" messages.

At receipt of such a request message, the server S determines a realm associated with the client, originator of the message, in addition to the IP address.
In the situation where the server S is a DHCP server, it may typically determine the realm from the "line" identifier, i.e. the option 82 of the DHCP header, as defined by the RFC 3046, "DHCP Relay Agent Information Option".

In the example displayed in the annexed figure, one assumes that client C₁ beholds to realm 1, and client C₂ to realm 2.

The server S manages a pool of available IP addresses. It provides the clients with an IP address according to their realm, in order to ensure that the same address is not allocated twice for a given realm. The same IP address can however be allocated for two different realms, at the same time.

One possible embodiment would consist in having the server S manage a separate address pool per realm.
When an IP address is allocated to client C₁, it is removed from the pool associated with realm 1. When an IP address (possibly the same) is allocated to the client C₂, it is removed from the pool associated with realm 2.

Once the realm and the IP address determined, the server S send reply messages MA₁, MA₂ to the clients C₁, C₂, with these 2 pieces of information. The determined realms could be transmitted by specifying identifiers. These identifiers can for example be a label or, simply, a number.
These reply messages may be "DHCPACK" messages compliant with RFC 2131. In this case, the DHCPACK message comprises an additional option field, adapted to store an identifier of the realm.

In the example shown in the figure, the client C₁ receives a reply message MA₁ containing a first IP address and an identifier of the realm 1. The client C₂ receives a reply message MA₂ containing a second IP address (possibly the same) and an identifier of the realm 2.
When receiving this reply messages, each client uses these IP addresses in outgoing subsequent IP datagram, like in any DHCP-based architecture. These IP addresses may then be included in the "yiaddr" field of the DHCP packets.

According to the invention, the clients however incorporate within the subsequent IP datagram MS₁, MS₂ the realm identifier that they got by the reply messages, MA₁, MA₂ respectively.
Client C₁ includes the identifier for realm 1 within a subsequent IP datagram MS₁ sent to an application server AS. Client C₂ includes the identifier for realm 1 within a subsequent IP datagram MS₂ sent to the application server AS.

When the application server AS receives the IP datagrams, it does not identify the client only by its IP address, but by the pair "IP address + realm identifier".
This pair is globally unique over the communication network N, due to the way they are determined by the server S. Even in the situation where the IP addresses allocated to the clients C₁ and C₂ are the same, the realm identifier is different so that the pair IP address/realm identifier identifies a unique client connected, at a given time, to the communication network.

The IP datagram MS₁ may per example convey a SIP messages, according to the RFC 3261.
We assume that the server S determines the same IP address "1.1.1.1" to both client C₁ and client C₂.
In this example, the client C₁ sends a SIP message to the application server AS. Relevant fields of this message could then be:
IP header: 1.1.1.1
IP option: realm 1
SIP Invite
SIP Contact: 1.1.1.1
SDP: 1.1.1.1, port 1 1 12

The client C₂ sends a SIP message to the application server AS, with, as relevant fields:
IP header: 1.1.1.1
IP option: realm 2
SIP Invite
SIP Contact: 1.1.1.1
SDP: 1.1.1.1, port 1112

This example further shows that the realm identifiers are included in the IP option of the IP datagram, and not as an option of the SIP/SDP message.

## Claims

1. Method for configuring a client (C₁, C₂) of a communication network (N), comprising
- a first step consisting in having said client send a request (MR₁, MR₂) to a server (S) adapted to dynamically determine an IP address for said client;
- a second step consisting in having said server sending a reply message (MA₁, MA₂) backward to said client, comprising said IP address; and,
wherein said client uses said IP address in subsequent IP datagram (MS₁, MS₂) sent through said communication network,
**characterized in that** said server determines a realm associated with said client, and includes an identifier of said realm within said reply message, said identifiers being included by said client in said subsequent IP datagram.

2. Method according to previous claim, wherein said request and said reply message comply with the Dynamic Host Configuration Protocol.

3. Method according to claim 2, wherein said reply message is a DCHPACK message, and comprises said identifier within an option field.

4. Method according to any of claims 1 to 3, wherein said identifiers is included in said subsequent IP datagram as a Header option of the IP packet.

5. Server (S) for configuring a client (C₁, C₂) of a communication network (N), comprising
- means for receiving a request (MR₁, MR₂) from said client, and dynamically determine an IP address for said client,
- means for sending a reply message (MA₁, MA₂) backward to said client, comprising said IP address; and,
**characterized in that** said server has means to determine a realm associated with said client, and to include an identifier of said realm within said reply message.

6. Server according to previous claim, adapted so that said request and said reply message comply with the Dynamic Host Configuration Protocol.

7. Server according to claim 6, wherein said reply message is a DCHPACK message, and comprises said identifier within an option field.

8. Server according to any of claims 5 to 7, wherein said identifiers is included in said subsequent IP datagram as a Header option of the IP packet.

9. Communication network comprising at least a server according to any of claims 5 to 8.
